Europäisches Patentamt

**European Patent Office**

Office européen des brevets

(19)

(11) Publication number: **0 058 785**
**A1**

(12) # EUROPEAN PATENT APPLICATION

(21) Application number: **81300671.5**

(22) Date of filing: **19.02.81**

(51) Int. Cl.³: **F 16 F 15/26**

(43) Date of publication of application: **01.09.82**
**Bulletin 82/35**

(84) Designated Contracting States: **DE FR IT**

(71) Applicant: **Triumph Motorcycles (Meriden) Limited,**
**Meriden Works Allesley, Coventry West Midlands**
**CV5 9AU (GB)**

(72) Inventor: **Morton, Paul Greville, 15 Firsway Wightwick,**
**Wolverhampton (GB)**

(74) Representative: **Cowan, David Robert et al, WALFORD**
**AND HARDMAN BROWN Trinity House Hales Street,**
**Coventry CV1 1NP West Midlands (GB)**

(54) **Means for reducing vibration in reciprocating engines.**

(57) A reciprocating engine havin piston (10), connecting rod (12) and a crankshaft (14) is balanced against vibration by a balancing link (17) pivotally attached to the crankshaft. The other end of the balancing link is attached to a guide link (19) to cause the guide link to move along a path normal to the crankshaft axis.

The position of attachment of the guide link to the balancing link is at the centre of percussion (E) of the balancing link which is displaced from the centre of gravity (G) of the balancing link a distance according to the polar radius of gyration of the balancing link and the distance between said centre of gravity and the point of attachment of the balancing link to the crankshaft.

-1-

## MEANS FOR REDUCING VIBRATION IN RECIPROCATING ENGINES

This invention relates to means for reducing vibration in reciprocating engines, in particular, but not exclusively, highspeed internal combustion engines.

Internal combustion engines are prone to two kinds of vibration one due to rocking about the crankshaft axis and the other termed translational vibration. The present invention is concerned with reducing translational vibration which arises due to the inertia forces emanating from the reciprocating parts, primarily the piston and connecting rod. In most six cylinder engines these vibrational forces are self-balancing due to the arrangement of the pistons. In the case of four cylinder in line engines rotational frequency forcing is self balancing and only the harmonic vibrations are unbalanced. However with large single cylinder and parallel twin engines considerable problems arise in reducing the rotational frequency and twice rotational frequency vibration forcing.

Various methods have been proposed for reducing vibration. One method uses unbalanced shafts rotating counter to the crankshaft. However such arrangements only cancel out the vibration at engine rotational frequency, they require a special drive arrangement, they can be noisy and unreliable and they are relatively expensive to be incorporated into an engine.

It has also been proposed to balance translational vibrational forces by providing counterbalancing means at the side of the crankshaft opposite the piston and moving in opposition to the piston. For example in British Patent 1,141,189 there is described such counterbalancing means and this is effective in achieving some reduction in translational vibration. However the proposed arrangement does not provide optimum balancing characteristics in a compact configuration suitable for high speed reciprocating engines, such
as are used on motorcycles. This arises because in the prior
arrangement no consideration has been given to the optimum position
for supporting the counterbalance mass from the pivoted link which
constrains the mass to move generally normal to the axis of the
crankshaft and in the direction of a line joining the crankshaft
axis and the piston. By selecting this position having regard
to the total mass of the counterbalance weight, including any arm
on which it is supported from the crankshaft, the balancing action
of the counterbalance weight can be optimised.

Similarly no consideration has been given to achieving a compact
configuration of the counterbalance so that it may be accommodated
in the limited space available on, for example, a motorcycle.
To achieve such a compact configuration the counterbalance must
extend as short a distance as possible from the crankshaft.
Consequently there is little room for accommodating support arms
whose mass cannot be discounted if an optimum balancing action is
to be achieved.

Accordingly the invention provides for reciprocating engines
balancing means in which the balancing action is optimised in an
arrangement which is simple, can be constructed in a compact manner
and produces low noise levels.

According to the invention a reciprocating engine comprises at least
one piston, a connecting rod connected at one end to the piston, a
crankshaft to which the other end of the connecting rod is attached,
and at least one balancing link constituting a balancing weight
and pivotally mounted at one end on the crankshaft, the other end
of the balancing link being constrained by guide means to follow a
generally rectilinear path normal to the axis of the crankshaft and
in opposition to the movement of the piston, the guide means being
in the form of a guide link pivotally attached at one end to a fixed
point, the arrangement being characterised in that the other end of
the guide link is attached to a point substantially coincident with
the centre of percussion of the balancing link, the centre of
percussion being defined by its displacement from the centre of gravity of the balancing link which is a distance which is equal to the square of the polar radius of gyration of the balancing link divided by the distance between the centre of gravity of the balancing link and its point of attachment to the crankshaft, whereby, during operation of the engine, the balancing link balances substantially all the inertia forces of the piston and connecting rod.

To reduce secondary vibration of the engine the arrangement of the connecting rod, the balancing link and the guide link is such that $\frac{AB}{BC}$ is substantially equal to $\frac{DE}{DC}$ where :-

AB is the distance between the connection of the connecting rods to the piston and the connection of the connecting rod to the crankshaft,

BC is the distance between the axis of the crankshaft and the connection of the connecting rod to the crankshaft

DE is the distance between the connection of the balancing link to the crankshaft and the connection of the guide link to the balancing link, and

DC is the distance between the crankshaft axis and the connection of the balancing link to the crankshaft; whereby secondary vibrations of the engine are reduced.

Preferably the guide link extends generally normal to a notional line joining the crankshaft axis and the connection between the piston and the connecting rod.

The invention is particularly suited to a parallel twin internal combustion engine having two pistons each with an associated connecting rod connected to a common crankshaft, and a balancing link is connected to said crankshaft between the connecting rods.

Conveniently a notional line joining the crankshaft axis and the attachment of the balancing link to the guide link is substantially colinear with a notional line joining the crankshaft axis and the attachment of the piston to the connecting rod.

Further features of the invention will appear from the following description of various embodiments of the invention given by way of example only and with reference to the drawings, in which:-

Fig. 1 is a schematic side elevation of one form of engine embodying the invention,

Fig. 2 is a schematic side elevation of another embodiment of the invention, and

Fig. 3 is a side elevation of a practical embodiment of the invention applied to a parallel twin internal combustion engine.

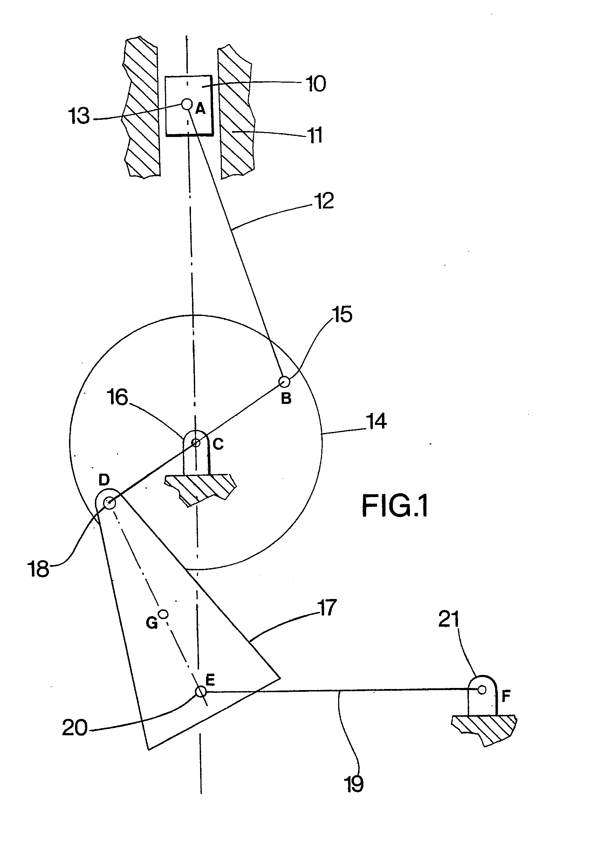

Referring to the drawings and firstly to Fig. 1 an engine includes a piston 10 movable to reciprocate in a cylinder 11 and pivotally connected to a connecting rod 12 through a bearing 13. The other end of the connecting rod 12 is connected to a crankshaft 14 through a bearing 15, all in known manner.

A balancing link 17 is attached pivotally to the crankshaft 14 through a bearing onto a crankpin 18. The crankpin is disposed at 180° around the pivot axis 16 of the crankpin 14 from the bearing 15. In the illustrated arrangement point 20 of the balancing link should move in a direction lying on a notional line joining the crankshaft axis 15 and the bearing 13 and for this purpose point 20 could be constituted by a guide means or slider moving rectilinearly between guides. However, according to the invention a guide link 19 is pivotally attached at 20 and the guide link 19 extends generally normal to said notional line when point 20 is at its central position of movement. The other end of the guide link 19 is pivotally attached to a fixed point 21 which may be on the engine crankcase. By the use of the pivoting link 19 sliding contact is avoided and pivoting movements only are involved. The

-5-

link 19 could, of course, extend to the other side of said notional line.

In Fig. 1 the centres of pivots 13, 15, 16, 18, 20 and 21 are designated A,B,C,D,E and F respectively and G denotes the centre of gravity of the balancing link 17. If the mass of the balancing link is m, the moment of inertia of the guide link 19 is I and the reciprocating mass of the engine is M, then the ideal form of the balance link configuration is governed by the following equations:-

1. $\dfrac{m \times DG \times DC}{DE}$ $+$ $\dfrac{I \times DC}{FE^2}$ $=$ $M \times BC$

2. $\dfrac{AB}{BC}$ $=$ $\dfrac{DE}{DC}$

Condition 2 ensures that secondary vibrations of the engine are reduced. Secondary vibrations are vibrations with a frequency of twice the running speed and these become more significant as the connecting rod to crank ratio i.e. ratio AB:BC becomes smaller. Consequently secondary vibration becomes of greater significance in compact engines in which the connecting rods are relatively short.

3. The square of the polar radius of gyration of the balance link
   $= DG \times GE$

Condition 3 determines the position E at which the pivotal connection 20 is located, and it is important that this condition is met to ensure that 20 is correctly placed and optimum balancing is achieved. The position E is denoted the 'centre of percussion' of the balancing link.

If the above conditions 1-3 are met the reciprocating forces are balanced and no spurious vibrations perpendicular to the plane through A, C and E are introduced.

4. In addition to these conditions the crankshaft should be balanced taking into account a mass equal to the rotating portion of the original connecting rods positioned at C as well as a mass equal to m x $\dfrac{GE}{DE}$ located at D.

Using the guide link 19 the locus of the pivot 20 is not rectilinear but an arc having a relatively large radius EF. Accordingly vibration forces of twice running frequency are introduced with an amplitude of approximately $\dfrac{DC}{EF}$ times the original unbalanced force amplitude. With a relatively large radius EF the movement of the pivot approximates to a rectilinear movement and the vibration forces introduced are at an acceptable level.

The action of the moving guide link should also be taken account of in arriving at the optimum arrangement. of the balancing link. Since one end of the guide link is fixed the guide link has an effective mass which is the mass of the moving link acting on the pivot between the guide link and balancing link. The effective mass is taken account of in selecting the mass and disposition of the balancing link. The geometry of the guide link can be arranged according to the equation (3) above for the balancing link. However these factors are relatively less significant for the guide link than for the balancing link.

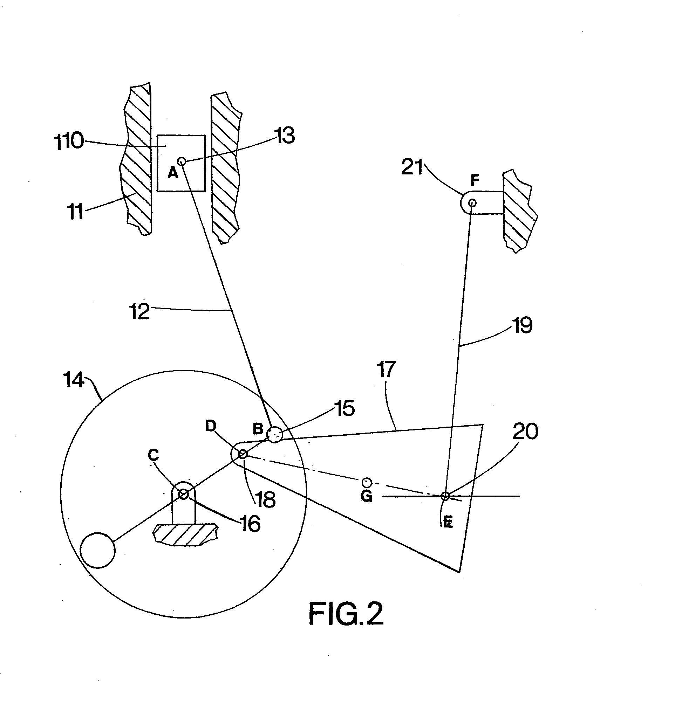

Referring now to Fig. 2 a different arrangement is illustrated in which a balance link 17' is arranged transversely to the balance link 17 of the Fig. 1 arrangement. The Fig. 2 arrangement reduces the overall height of the engine and associated balancing arrangement. In Fig. 2 similar parts are given the same reference numbers as in the Fig. 1 embodiment.

In Fig. 2 the engine includes piston 10, cylinder 11 and bearing 13. A connecting rod 12 is connected to a crankshaft 14 having an axis 16. The balancing link 17' is positioned so that a line joining the bearing 13 and the crankshaft axis 16 is at approximately a right angle to a line from bearing 20 to the crankshaft axis 16.

The balancing link 17' is pivoted to the crankshaft 14 at 18 at one end of the link 17' and the other end of the link is pivotally attached at 20 to a guide link 19, the other end of which is pivotally attached to a fixed point at 21, above pivot 20.

In the arrangement of Fig. 2 the conditions (1), (2) and (3) given above in relation to the Fig. 1 arrangement still apply. However with regard to condition (4) it is necessary to assume that the whole of the piston and connecting rod mass is placed at B and should be balanced in the rotational sense as by a balance weight at 22.

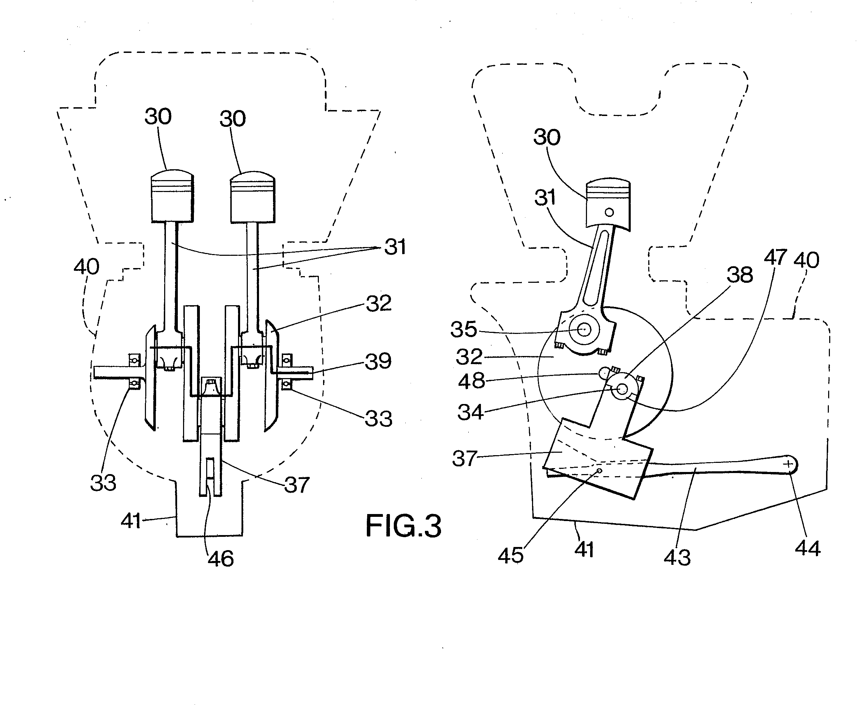

Referring now to Fig. 3 an application of the invention to a parallel twin motorcycle engine is illustrated based on the schematic arrangement of Fig. 1.

Conventional pistons 30 and connecting rods 31 are connected to a common crankshaft 32 mounted in bearings 33. The crankshaft 32 carries a crankpin 34 in addition to and between crankpins 35 for the connecting rods 31.

A balancing link 37 is carried on the crankpin 34 and is retained by a cap 38 to run on a white metal bearing. Lubrication of the bearing is by means of drillings fed from the engine oil pump (not shown) and shown diagrammatically by a line 39. Thrust bearings 47 are provided on both sides of the balancing link 37.

The engine crankcase 40, shown dotted, is extended as shown by full lines 41 to accommodate the balancing link 37 and a guide link 43 mounted on a pivot pin 44. The guide link 43 is connected to the balancing link 37 by a pivot pin 45 and a slot 46 is formed in the balancing link 37 to receive the guide link 43.

The throw of the crankpin 34 which is the distance between the axis of the pin 34 and the axis of rotation 48 of the crankshaft is displaced through $180^{o}$ from the throw of the connecting rod crankpins 35 and is chosen to minimise the depth of the extension 41 of the crankcase 40. The distance between the pivot pin 45 and the guide link pivot 44 is of the order of eight times the throw of the crankpin 34. The dimensions of the balancing link 37 follow the principles outlined above and the size of the crankpin

0058785

-8-

34 is chosen to give the desired strength and lubrication characteristics. Thrust bearings 48 are provided on both sides of the balancing link 37.

Tests have shown that the invention is effective in suppressing vertical translational vibrations.

In the case of the parallel twin engine of Fig. 3 it will be seen that only one balancing link 37 and associated guide link 43 is provided to balance the two pistons. Moreover the balancing link moves in a plane parallel to the planes of movement of the pistons and in the same direction i.e. vertically as shown.

A different arrangement of balancing link may be provided for other kinds of engine. For example a single cylinder engine may have two balancing links, one located to each side of the connecting rod for the piston.

It will be seen that in the embodiment of Figs. 1 and 3 a line joining the piston to connecting rod connection and the crankshaft axis and a line joining the balancing link to guide link connection and the crankshaft axis are substantially colinear in end elevation and this arrangement gives a superior balancing action to the Fig. 2 arrangement in which the corresponding lines are substantially normal to one another.

CLAIMS

1. A reciprocating engine comprising at least one piston (10), a connecting rod (12) connected at one end to the piston, a crankshaft (14) to which the other end of the connecting rod is attached, and at least one balancing link (17) constituting a balancing weight and pivotally mounted at one end (18) on the crankshaft, the other end of the balancing link being constrained by guide means (19, 20, 21) to follow a generally rectilinear path normal to the axis of the crankshaft and in opposition to the movement of the piston, the guide means being in the form of a guide link (19) pivotally attached at one end (21) to a fixed point, the arrangement being characterised in that the other end (20) of the guide link (19) is attached to a point (20) substantially coincident with the centre of percussion (E) of the balancing link (17), the centre of percussion (E) being defined by its displacement from the centre of gravity (G) of the balancing link (17) which is a distance which is equal to the square of the polar radius of gyration of the balancing link (17) divided by the distance between the centre of gravity (G) of the balancing link and its point of attachment (D) to the crankshaft (14), whereby, during operation of the engine, the balancing link (17) balances substantially all the inertia forces of the piston (10) and connecting rod (12).

2. An engine according to Claim 1 characterised in that the arrangement of the connecting rod (12), the balancing link (17) and the guide link (19) is such that $\frac{AB}{BC}$ is substantially equal to $\frac{DE}{DC}$ where :-

AB is the distance between the connection (A) of the connecting rod (12) to the piston (10) and the connection (B) of the connecting rod (12) to the crankshaft (14),

BC is the distance between the axis (C) of the crankshaft (14) and the connection (B) of the connecting rod (12) to the crankshaft (14)

DE is the distance between the connection (D) of the balancing link (17) to the crankshaft (14) and the connection (E) of the guide link (19) to the balancing link (17), and

DC is the distance between the crankshaft axis (C) and the connection (D) of the balancing link (17) to the crankshaft (14); whereby secondary vibrations of the engine are reduced.

3. An engine according to Claim 1 or 2 characterised in that the guide link (17) extends generally normal to a notional line joining the crankshaft axis (5) and the connection (A) between the piston (10) and the connecting rod (12).

4. An engine according to Claim 1, 2 or 3 characterised in that a notional line joining the crankshaft axis (C) and the attachment (E) of the balancing link (17) to the guide link (19) is substantially colinear with a notional line joining the crankshaft axis (C) and attachment of the piston (10) to the connecting rod (12).

5. An engine according to any one of the preceding claims characterised in that the engine is a parallel twin internal combustion engine having two pistons (30) each with an associated connecting rod (31) connected to a common crankshaft (32), and a balancing link (37) is connected to said crankshaft (32) between the connecting rods (31).

6. An engine according to any one of Claims 1 - 4 characterised by a single piston (10) and associated connecting rod (12) and crankshaft (14) and two of said balancing links one to each side of said connecting rod.

0058785

-11-

7. An engine according to any one of the preceding claims characterised
in that the balancing link (37) is formed with a slot (46)
in which the guide link (43) is movable.

8. An engine according to any one of the preceding claims
characterised in that the balancing link (17) moves in a
plane substantially parallel to the plane of movement of the
piston (10) and in the same direction as the piston.

0058785

1/3

FIG.1

110

13

11

A

21

F

12

19

14

17

D    B

15

C

G    20

18

E

16

**FIG.2**

FIG.3

# EUROPEAN SEARCH REPORT

European Patent Office

**Application number**

EP 81 30 3671

| | DOCUMENTS CONSIDERED TO BE RELEVANT | | |
|---|---|---|---|
| Category | Citation of document with indication, where appropriate, of relevant passages | Relevant to claim | |
| X | <u>FR - A - 496 102</u> (H.R. RICARDO) <br> * The whole document * | 1,2,3, 4,6,8 | |
| | <u>US - A - 3 112 658</u> (M.J. BERLYN) <br> * The whole patent * | 1,2,5, 8 | |
| | <u>GB - A - 517 303</u> (BOLINDER-MUNKTELL) <br> * The whole patent * | 1 | |
| D | <u>GB - A - 1 141 189</u> (BRIGGS-STRATTON) <br> * The whole patent * | 1 | |
| A | <u>FR - A - 2 360 756</u> (CITROEN) | | |
| A | <u>DE - A - 2 423 134</u> (VOLKS-WAGENWERK) | | |
| A | <u>US - A - 1 794 715</u> (C.Y. KNIGHT) | | |

**CLASSIFICATION OF THE APPLICATION** (Int. Cl. 3)

F 16 F 15/26

**TECHNICAL FIELDS SEARCHED** (Int. Cl. 3)

F 16 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-05-1981 | CINQUANTINI |

EPO Form 1503.1 06.78